# EUROPEAN PATENT SPECIFICATION

(11) **EP 3 544 749 B1**
(45) Date of publication and mention of the grant of the patent: **04.01.2023**
(21) Application number: 17808091.7
(22) Date of filing: 22.11.2017
(51) Int. Cl.: B09C 1/08, B09C 1/10

(54) **BONE MEAL AND/ OR MEAT AS ADDITIVE FOR ENVIRONMENTAL REMEDIATION OF POLLUTED MATERIAL**
KNOCHENMEHL ODER FLEISCH ALS ZUSATZSTOFF ZUM AUFBEREITEN VON VERSCHMUTZTEM MATERIAL
FARINE D'OS OU VIANDE UTILISÉES COMME ADDITIF POUR LE TRAITEMENT DE MATIÈRE POLLUÉE

(30) Priority: 25.11.2016 FI 20165898
(43) Date of publication of application: 02.10.2019
(73) Proprietor: Honkajoki Oy, 38950 Honkajoki (FI)
(72) Inventor: SINKKONEN, Aki, 15100 Lahti (FI); ROMANTSCHUK, Martin, 15100 Lahti (FI); KIVELÄ, Jukka, 09120 Karjalohja (FI)
(74) Representative: Espatent Oy
(86) International application number: PCT/FI2017/050806
(87) International publication number: WO 2018/096210

(56) References cited:
- WO-A1-00/40666
- WO-A1-2015/013267
- WO-A2-2007/054786
- US-A- 5 618 725
- US-A1- 2009 084 731
- US-A1- 2010 137 126
- MARK E HODSON ET AL: "Bonemeal Additions as aRemediation Treatment for MetalContaminated Soil", INTERNET CITATION, 15 July 2000 (2000-07-15), pages 3501-3507, XP002777421, Retrieved from the Internet: URL:http://pubs.acs.org/doi/pdf/10.1021/es 990972a [retrieved on 2018-01-18]
- THERESA KEARNEY: "Remediation of Toxic Metal Pollutionin Soil Using Bone meal Amendments", INTERNET CITATION, 1 January 2000 (2000-01-01), XP002777422, Retrieved from the Internet: URL:https://www.gov.uk/government/uploads/ system/uploads/attachment_data/file/290289 /stsps352-e-e.pdf [retrieved on 2018-01-18]
- J.L WALWORTH ET AL: "Nutrient amendments for contaminated peri-glacial soils: use of cod bone meal as a controlled release nutrient source", COLD REGIONS SCIENCE AND TECHNOLOGY, vol. 37, no. 2, 1 September 2003 (2003-09-01), pages 81-88, XP055063194, ISSN: 0165-232X, DOI: 10.1016/S0165-232X(03)00029-6

## Description

### Technical field

The present invention relates to the field of environmental remediation, particularly to remediation of polluted material such as soil.

The present invention also provides a novel additive for soil remediation and its use in environmental remediation and as a bioremediation enhancer.

### Background

This section illustrates useful background information without admission of any technique described herein representative of the state of the art.

Contaminated land sites pose risks both to the environment and to human health. Harmful pollutants include oils and fuels, pesticides and herbicides, wood preservatives, and heavy metals. Environmental remediation of contaminated sites aims to at least partially degrade organic pollutants and to immobilize heavy metals.

Environmental remediation of contaminated sites may be performed without any remediation additives. This type of remediation is called natural attenuation. Natural attenuation is, however, slow and inefficient, and the degradation rate is limited by supply of nutrients and oxygen.

To overcome the limitations of natural attenuation, various remediation additives have been used.

Calcium peroxide has been used in soil remediation to increase the supply of oxygen. Another way to increase the supply of oxygen is to increase the availability of the oxygen from air by mixing porous material, such as wood chips, with the contaminated soil.

Urea is commonly applied as a remediation additive. Urea is mainly used for nutrient supply, particularly as a nitrogen source. However, the use of urea as an additive in soil remediation causes detrimental effects, such as rise in pH, fast nitrification and a drop in bacterial viability. Additionally, urea is solubilized rather rapidly, which results in leaching of nutrients. The leaching shortens the duration of the remediation effect and may cause environmental issues. Methylene urea has also been used as an alternative for urea. Methylene urea has less important detrimental effects in soil remediation, but it is expensive. In addition, methylene urea is only capable of improving carbon-to-nitrogen ratio.

As discussed in the foregoing, both urea and methylene urea have considerable shortcomings when used as additives in soil remediation.

US 5,618,725 discloses acylated fish meal and acylated meat meal for treatment of hydrocarbon polluted seawater. The polluted seawater is treated by applying the acylated meal on the surface of the hydrocarbons.

WO2015/013267 A1 discloses a method for stabilizing heavy metal in heavy metal bearing paint residue waste.

US2010/137126 A1 discloses a mixed product comprising inorganic and organic material for use e.g. in paper making or water processing.

WO00/40666 discloses a process for treating hydrocarbon contaminated material. US5618725 discloses an additive and its use in biodegradation of hydrocarbon polluted medium. Mark E. Hodson et al. ("Bonemeal Additions as a Remediation Treatment for Metal Contaminated Soil", Environ. Sci. Technol. 2000, vol. 34, no. 16 15 July 2000 (2000-07-15), 2000, pages 3501-3507, DOI: 10.1021/es990972a) discloses that bone meal reduces metal availability in soils. Theresa Kearney ("Remediation of Toxic Metal Pollution in Soil Using Bone meal Amendments", WRc pic., Frankland Road. Blagrove, Swindon SN5 8YF, UK, 2000) discloses that bone meal reduces metal release in contaminated soil. US 2009/084731 discloses a method for manufacturing a remediation material for ground water and soil. WO 2007/054786 discloses a method for disinfecting or sterilising soil by ammonia.

J.L Walworth et al. ("Nutrient Amendments for Contaminated Peri-Glacial Soils: Use of Cod Bone Meal as a Controlled Release Nutrient Source", Cold Regions Science and Technology, vol. 37, no. 2, 1 September 2003 (2003-09-01), pages 81-88, XP055 063 194, ISSN: 0165-232X, DOI:10.1016/S0165-232X(03)00029-6) discloses use of cod bone meal in contaminated peri-glacial soils.

The present invention aims to solve at least some of the problems encountered in remediation or at least to offer a new technical alternative. Another aim is to provide a novel remediation additive. Another aim is to provide novel value-added use for by-products of meat industry often unsuitable for use in food industry or in animal feed.

### Summary of the invention

According to a first aspect is provided use of additive in environmental remediation of polluted material, wherein the additive comprises bone meal.

The present inventors have developed a novel way of environmental remediation by using an additive comprising BM. Surprisingly, the additive was found to accelerate the remediation process significantly and over a long time, and to avoid detrimental effects of known remediation additives. As evidenced by Examples below, when the present invention was used at a laboratory and field use scale, the remediation of contaminated material was successful. Further, the present invention was able to maintain pH at a level promoting remediation and provided an enhanced remediation of many contaminated soil types.

The present invention also provides a valued-added use for BM, which is inexpensive material originating from slaughterhouse byproducts and animal bones and their commercial applications are scarce. It has previously been used in animal feed, but since suspected of spreading bovine spongiform encephalopathy (BSE), use in animal feed is forbidden in many countries. Thus, it is commonly combusted to produce energy.

Also disclosed is a use of an additive comprising bone meal in environmental remediation of polluted material, characterized in that
the bone meal is used as an oxygen source,
the additive comprises bone meal from slaughterhouse byproduct and comprises less than 50 % w:w of proteins; at least 10 % w:w of lipid material; 23-60% w:w of C; 8-13 % w:w of Ca; 5-9 % w:w of P; 5-8.5 % w:w of N; and wherein the ratio of N:P ranges from 0.5 to 2 and the ratio of C:N ranges from 3 to 4,
and the use comprises mechanical mixing of the additive with the polluted material.

In an embodiment the weight fraction percentages of the additive are expressed as percentages of dry matter weight.

The additive is effective in providing nutrients and oxygen to the remediation process. The additive is particularly effective in promoting remediation of soil polluted with hydrocarbon mixtures by enhancing microbiological activity.

According to a third aspect is provided a bioremediation enhancer comprising the additive of the second aspect.

### Brief description of the figures

Figure 1. A graph presenting the evolution of pH as a function of time in diesel contaminated sand, wherein a first soil sample was remediated by natural attenuation, a second soil sample was treated with ca 2 % w:w MBM, and a third soil sample was treated with ca 2 % w:w urea.
Figure 2. A column chart presenting the residual content of oil hydrocarbons in oil contaminated soil after 4 weeks and 12 weeks of environmental remediation. A first soil sample was remediated by natural attenuation, and a second soil sample was treated with 2 % w:w MBM.
Figure 3. A graph presenting the oil content in soil contaminated with oil as a function of time. A first soil sample was remediated by natural attenuation, and a second soil sample was treated with 2 % w:w MBM.
Figure 4. A column chart presenting the residual content of polyaromatic hydrocarbons (PAHs) in sand contaminated with PAHs after three months of remediation. A first soil sample was treated with 2 % w:w MBM, a second soil sample was treated with 2 % w:w urea and a third soil sample was remediated by natural attenuation.

### Detailed description of the invention

The terms "remediation" and "environmental remediation" are used to describe at least partial degradation of at least one pollutant. Additionally, the term may cover at least partial immobilization of at least one heavy metal. Further, the term cover combined degradation of at least one pollutant and immobilization of a heavy metal. The degradation may be biodegradation, such as microbial degradation.

The term "soil remediation" is used to describe remediation of soil, earth, ground, sand, sediment, clay, mud, sludge, slurry, peat, dredging masses, compost, litter, ash, industrial waste streams, and mixtures thereof, and of other similar materials.

The term "comprising" includes the broader open meanings of "including", "containing", and "comprehending", as well as the narrower closed meanings of the expressions "consisting of" and "consisting only of".

The term MBM refers to "meat and bone meal". In an embodiment MBM covers MBM, bone meal (BM), and mixtures thereof. MBM and BM are commonly produced from slaughterhouse by-products comprising bone. In an embodiment MBM or BM is produced from by-products of food industry. In another embodiment MBM or BM is produced from by-products of animal feed production. In yet an embodiment MBM or BM is produced from by-products of meat meal production. In yet an embodiment MBM is produced from animal carcasses including bones.

MBM contains nutrients beneficial in soil remediation, such as proteins, C, Ca, P, N, and O. In the present invention O is present in BM or MBM in the bone and lipid material, thus providing a source of oxygen. The composition of MBM is beneficial for use as a microbial nutrition: e.g. the N:P ratio ranges from 0.5 to 2 and the C:N ratio from 3 to 4. From BM and MBM nutrients and oxygen are released slowly, providing extended release of oxygen and nutrients, which extends the duration of the remediation effect. Additionally, fast and excessive release of nutrients can be avoided, thus avoiding leaching and fast nitrification. Further, the use of MBM in environmental remediation does not alter the pH of the polluted material and, hence, it does not disturb microbial activity.

In an embodiment of the first aspect the polluted material comprises soil, earth, ground, sand, sediment, clay, mud, sludge, slurry, peat, dredging mass, compost, litter, ash, industrial waste stream, or a mixture thereof.

In another embodiment of the first aspect the polluted material comprises soil, earth, ground, sand, sediment, clay, mud, sludge, peat, dredging masses, or a mixture thereof.

In an embodiment of the first aspect the polluted material contains at least one organic pollutant selected from gasoline, diesel fuel, diesel oil, oil hydrocarbon, dye, polyaromatic hydrocarbon, chlorophenol, straight-chain hydrocarbon, branched hydrocarbon, cyclic hydrocarbon, aromatic hydrocarbon, halogenated hydrocarbons, halogenated aromatic hydrocarbons, methyl tert-butyl ether, triazine, hydrocarbon with at least one triatzine ring, and a mixture thereof.

In an embodiment of the first aspect the polluted material contains at least one organic pollutant selected from oil hydrocarbon, diesel oil, diesel fuel, and polyaromatic hydrocarbons.

Further, BM may be used in environmental remediation of multi-contaminated material, wherein the pollutants comprise at least one organic pollutant and at least one heavy metal.

In an embodiment the polluted material further comprises at least one heavy metal.

With the present invention heavy metals present in the contaminated material can be immobilized. This enables simultaneously accelerating remediation process and immobilizing heavy metals. Heavy metals suitable for remediation with the present invention comprise heavy metals selected from Zn, Cu, Pb, As, Au, I, Ag, Hg, Co, Cd, Sn, and Sr.

In an embodiment no additional source of oxygen is added in the remediation.

In an embodiment BM is used as an oxygen source in the remediation.

In an embodiment the oxygen source is a microbial oxygen source.

The invention advantageously provides the contaminated material with both a nutrition source and an oxygen source. Prior solutions have relied on providing an additional oxygen source in a form of e.g. wood chips or dust, or by aerating the material.

In an embodiment remediation is performed *in situ.*

*In situ* techniques may be used e.g. in remediation of soil that allow mechanical mixing of the additive with the polluted material even in deep soil layers; in remediation of dense soil where infiltration of water-dissolved nutrients is inefficient; in remediation of deep soil layers when excavation is expensive; in remediation that uses a reactive barrier; or whenever a slow release nutrient source is required.

In an embodiment remediation is performed *ex situ.*

*Ex situ* techniques may be used in remediation of any kind of soil. *Ex situ* remediation may be used when *in situ* techniques are difficult to perform, e.g. when the contaminated land site is large, or the contaminated land site contains clay soil, or when there is a risk of contaminant leach into ground water. The remediation may be performed *ex situ* when excavation is considered a valid option to move the soil from the site, followed by off-site or on-site addition of a slow release additive.

In an embodiment the additive is mixed with the polluted material. Mixing can be carried out using means known by the person skilled in the art, such as: equipment used for underground mixing of soil, equipment used in construction industry, agricultural machinery, modified agricultural machinery, mixing equipment used in composting, drills, whiskers, or a front loader. Examples of agricultural machinery are rotovators, subsoilers, and cultivators.

In an embodiment the additive is applied as slurry. The slurry may be pumped into the polluted material or injected into boreholes.

In an embodiment the additive is applied on the surface of the polluted material. Penetration of the additive into the polluted material may be enhanced by sprinkling water on the surface of the polluted material containing additive.

In an embodiment the ratio of the additive to the polluted material ranges from 0.001 to 0.5, preferably 0.001 to 0.2, more preferably 0.005 to 0.1. The ratio of the additive to the polluted material is determined depending on the amount and the properties of the pollutant or pollutants, and the properties of the polluted material. Since MBM and BM releases nutrients slowly, overdosing of nutrients is unlikely. Therefor a ratio of additive to polluted material larger than 0.2 may be used in remediation of the polluted material.

In an embodiment the additive is mixed with the polluted material by an excavator with a screening bucket. The mixing may also be performed manually, or by using mixing methods known in the art. Such methods may include methods performed with mixing devises for underground use.

In an embodiment the additive is used as a dry powder. Use of the present additive in environmental remediation allows various formulations and physical forms. The particle size of the additive can be selected e.g. based on the desired nutrient release rate. Preferably, the particle size is from 0.5 to 5mm, and more preferably from 0.5 to 2mm.

Alternatively, the additive is used as a pellet or a granule. A larger particle size provides a slower release rate. Suitable particle size for environmental remediation use comprises particles with a diameter ranging from 0.5 to 50 mm. Preferably a pellet used for environmental remediation has a diameter selected from a range from 3 to 7 mm and a length selected from a range from 5 to 10 mm. In an embodiment the majority of the particles has a dimension in an above range, whereas a minority of the particles has a different size.

The pellet or the granule may be compressed. In this embodiment the pellet or the granule may comprise additive in various particle sizes that are before compression preferably smaller than the particle or granule itself, or it may be compressed from a homogenous additive material having essentially uniform particle size. Alternatively, it may contain additive dust and larger additive grains that are compressed into a pellet having a predetermined pellet size.

The additive may also be mixed with other compounds, and/or materials, to form a soil remediation composition, or a bioremediation enhancer. In an embodiment the other compounds comprise at least one of nutrients, coloring agents, preservatives, fillers and binders. In an embodiment the materials comprise peat, mull, sand, organic by-products, such as sugar industry by-products, or by-products from pulp and paper industry, or mixtures thereof.

In an embodiment the use or the additive further comprises using calcium peroxide. In an embodiment calcium peroxide is provided in a composition comprising the additive. Calcium peroxide is particularly advantageous when used for certain soil types, such as dense soil with a limited air flow, or with a limited water exchange; or deep soil layers where oxygen is likely to be the limiting factor of the remediation; or in soil layers below the ground water level.

In an embodiment the additive is the additive according to the second aspect.

In an embodiment the additive does not contain fish meal.

In an embodiment the use or the additive comprises further using wood chips or saw dust.

In an embodiment the additive comprises BM.

In an embodiment of the second aspect the additive comprises or is composed of BM.

In an embodiment of the second aspect the additive comprises from 40 to 47 % w:w of protein and 10-15 % w:w of lipid material.

In an embodiment of the second aspect the additive is a powder.

In yet another embodiment of the second aspect of the present invention, the additive is included in a pellet.

In an embodiment of the second aspect the additive is included in a granular soil.

In an embodiment the additive is derived from a side stream of food or feed industry.

In an embodiment the additive is not as such suitable for feed or food use.

### Examples

### Comparative example A. Effects of MBM on pH-values of diesel-oil contaminated soil

The soil used in the study of Example A was oil contaminated sand (particle size max 4 mm). The sand was contaminated with Neste Green -diesel ca. 4 years prior to the remediation study. Between the contamination and the start of the remediation study, the sand was lying idle outside in the open, after which the sand was transferred to a laboratory. The oil content was 1500 mg/kg at the beginning of the study.

The soil was treated with nutrient addition, either with ca. 2 % w:w MBM or with ca. 2 % w:w urea, or remediated by natural attenuation. Each condition included three replications. The amount of urea-N was calculated to correspond to a C:N ratio of 100:1. The total amount of carbon in the sand, calculated from the organic matter content, was 0.9 % w:w. All remediation additives were added in the beginning of the study, after which each sample of contaminated sand and remediation additive, where applicable, was placed in 5 dl glasses (diameter 85 mm, height 125 mm), and the glasses were covered with Petri dishes. A Petri dish is not a hermetic cover; there for a light airflow existed underneath the Petri dish. The amount of sand per glass was approximately 200 g. Throughout the experiment, the moisture of all samples was kept at 60 % of the water holding capacity (WHC) of the sample, and the glasses were located in an incubator at 27.5 °C.

A total of 10 samplings was conducted. The sampling was done weekly. At each sampling, approximately 3.33 g of sand was sampled from each glass. Three 3.33 g subsamples, all exposed to the same conditions, were mixed together and the pH-value of the combined sample was measured.

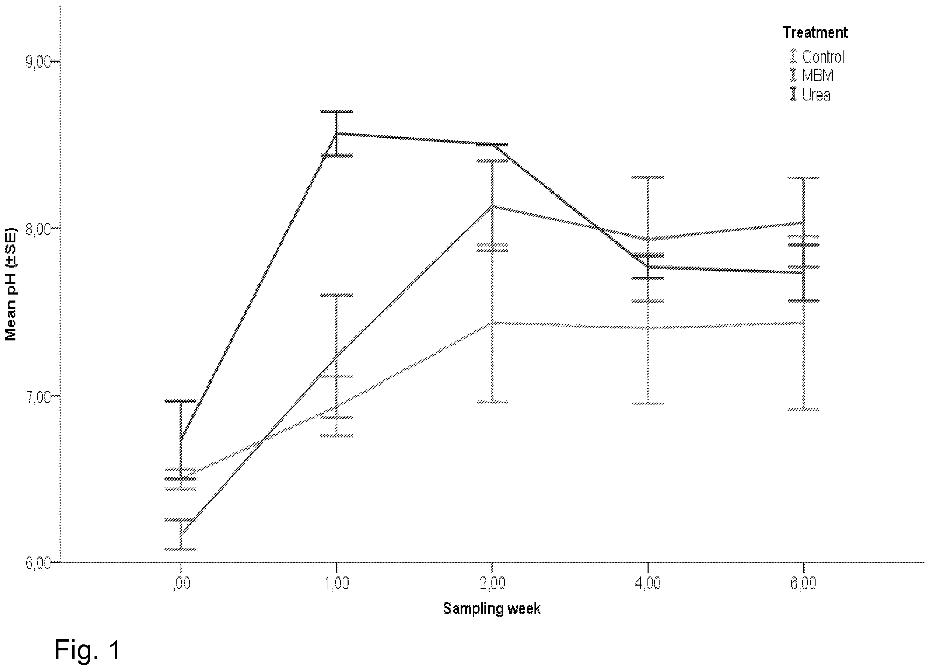

After the first and the second week of the study, changes between pH values of natural attenuation samples, MBM treated samples and urea treated samples were observed; χ22,9 = 5.965, p = 0.058; χ22,9 = 6.124, p = 0.045, respectively (Figure 1). Only between the urea treated sample and the natural attenuation sample, a difference was observed the second week. Calculated from the samples taken the first week; Z = -1.993, p = 0.046; and calculated from the samples taken the second week: Z = -2.087, p = 0.037 (Figure 1). Between urea treated samples and MBM treated samples, the differences observed were: calculated from the samples taken the first week; Z = -2.023, p = 0.043; and calculated from the samples taken the second week; Z = -1.212, p = 0.034 (Figure 1). During the two week study, the pH-values of MBM treated samples and samples left for natural attenuation did not differ: calculated from the samples taken the first week; Z = -0.664, p = 0.507; and calculated from the samples taken the second week; Z = -1.107, p = 0.268).

Thus, the MBM treatment does not drastically change the pH-level of oil contaminated soil, whereas the urea treatment changes the pH-levels of oil contaminated soil and hampers the remediation process. The detrimental raise of pH in soils typical for urea treatment can thus be avoided by using MBM as a remediation additive.

### Comparative example B. MBM treatment of diesel oil contaminated soil

The study of Example B includes a remediation study of oil contaminated soil. The remediation was studied both in a laboratory and in the field. The soil used in the study of Example B originated from an old petrol station. The oil contaminated soil was relocated prior to the study, and part of the soil was transported to a laboratory.

Remediation by natural attenuation and remediation by MBM treatment were studied simultaneously in a laboratory and in the field. In the field, the contaminated soil was divided into two separate heaps, of which one was left for remediation by natural attenuation and the other was treated with 2 % w:w MBM. The volume of each heap was approximately 4.5 m³, and the mass of each heap was approximately 7000 kg The MBM was mixed with the soil by an excavator with a screening bucket. The moisture content of the heaps was determined by visual estimation. When necessary, water was added during the admixture of the heap. The heaps were covered with tarpaulin.

In the laboratory, an experiment mimicking the field study was conducted. Instead of heaps, samples of contaminated soil were placed in large plastic cylinders with lids; MBM treated samples (ca. 2 % w:w of MBM) and samples left for remediation by natural attenuation were placed in separate cylinders. The admixture was done by rolling over and turning the cylinder upside down several times. The moisture content of the samples was determined by touching the sample and by visual estimation. When necessary, water was added. The temperature in the laboratory was adjusted to a room temperature of 21°C.

The sampling intervals in the laboratory and in the field were equal in length. A first sampling was done at the start (zero datum) and a second sampling was performed 4 weeks later. A third sampling was performed 12 weeks from the zero datum, and a fourth sampling was done 18 weeks from the zero datum. At each sampling day, each cylinder was sampled. For each sample, three subsamples were taken from three random spots and immediately combined and mixed thoroughly. The same sampling method was repeated in the *ex situ* experiment whenever heaps were mixed so that each sample consisted of three random subsamples. Samples were collected in sealable plastic bags, transferred to the laboratory, when applicable, and stored in a freezer (-21°C). In addition, samples for pH measurements were collected and analysed in the laboratory the day following the sampling points.

Three samples per heap or cylinder were treated for analysis. The oil compounds were extracted from the samples with acetone and hexane, and detected with a flame ionization detector (GC-FID, Agilent 6890N) according to the ISO16703 (2015) standard .

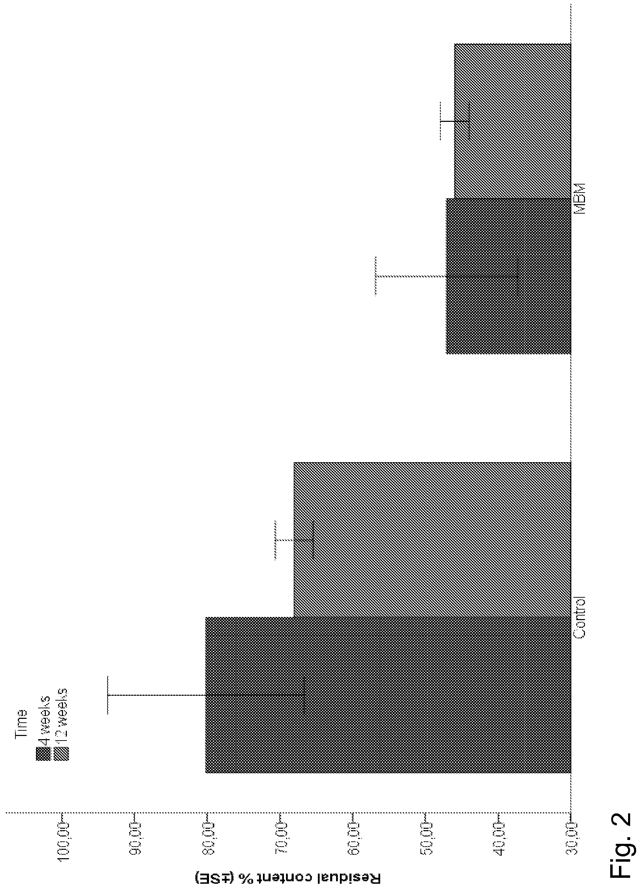

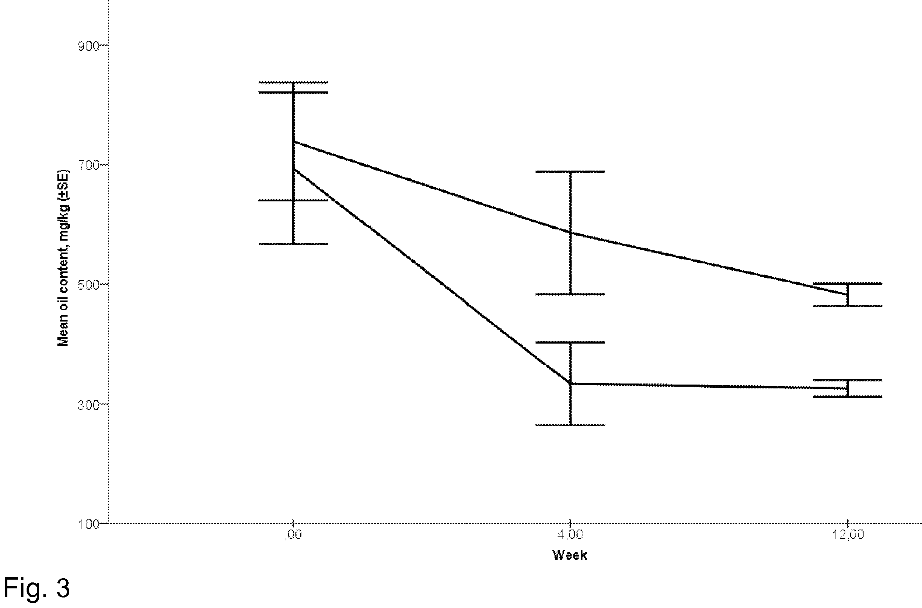

The remediation of the oil contaminated soil was accelerated by the MBM treatment. At the zero datum, the concentration of oil hydrocarbons in the contaminated soil was ca. 900 mg/kg (fractions C10-C21). The natural attenuation reduced the concentration of oil compounds with 20 % w:w during the first month and with 30 % w:w three months from the zero datum (Figure 2). The MBM treatment reduced the concentration of oil compounds with over 50 % w:w during the first month (Figure 2), and three months from the zero datum, the concentration of oil hydrocarbons was reduced to an average value of 320 mg/kg (Figure 3.). The difference in the residual oil content between remediation by natural attenuation and by MBM treatment three months from the zero datum was significant (after one month: t10 = 1.98, p = 0.076; after three months t10 = 6.77, p < 0.001). Already one month of MBM treatment remediated the contaminated soil significantly (Z=-2,201, p = 0,028, Figure 3), whereas natural attenuation did not remediate soil (χ22,6 = 4.00, p = 0.135, Figure 3), demonstrating functional remediation by the MBM treatment.

### Comparative example C. MBM treatment of PAH contaminated soil

The soil used in the study of Example C was PAH contaminated sand (particle size max 4 mm). The sand was contaminated with a mixture of 5 different PAHs: phenanthrene, fluoranthene, pyrene, chrysene, and benzo[b]fluoranthene. A total amount of 400 µg PAHs were added to sand with a dry weight of 195g: The resulting PAH content was approximately 2µg/g.

The soil was treated with remediation additives, either with ca. 2 % MBM or with ca. 2 % urea, or remediated by natural attenuation. Each condition included three replications. The amount of urea-N was calculated to correspond to a C:N ratio of 100:1. The total amount of carbon in the sand, calculated from the organic matter content, was 0.9 % w:w. All remediation additives were added in the beginning of the study, after which each sample of contaminated sand and remediation nutrient, where applicable, was placed in 5 dl glasses (diameter 85 mm, height 125 mm), and the glasses were covered with Petri dishes. A Petri dish is not a hermetic cover; there for a light airflow existed underneath the Petri dish. The moisture of all samples was kept at 60 % of the water holding capacity (WHC) of the sample, and the glasses were located in an incubator at 27.5 °C throughout the three-month experiment.

A total of five samplings was performed during the study. A first sampling was performed in the beginning of the study (zero datum), and the following four samplings were carried out every fourth week. At each sampling point, 2 g of sand was sampled from each glass. The samples were collected in sealable plastic bags and stored in a freezer (-21°C) until the samples were treated for analysis. Prior to the extraction of residual PAHs, the samples were defrosted and dried in a fume chamber at 21°C. The extraction was done following a method of Honkonen and Rantalainen (2013), parallel with the ISO18287 (2015) standard. The residual PAHs were analysed by gas chromatography-mass spectrometry (GC-MS, Shimadzu GCMS-QP2010).

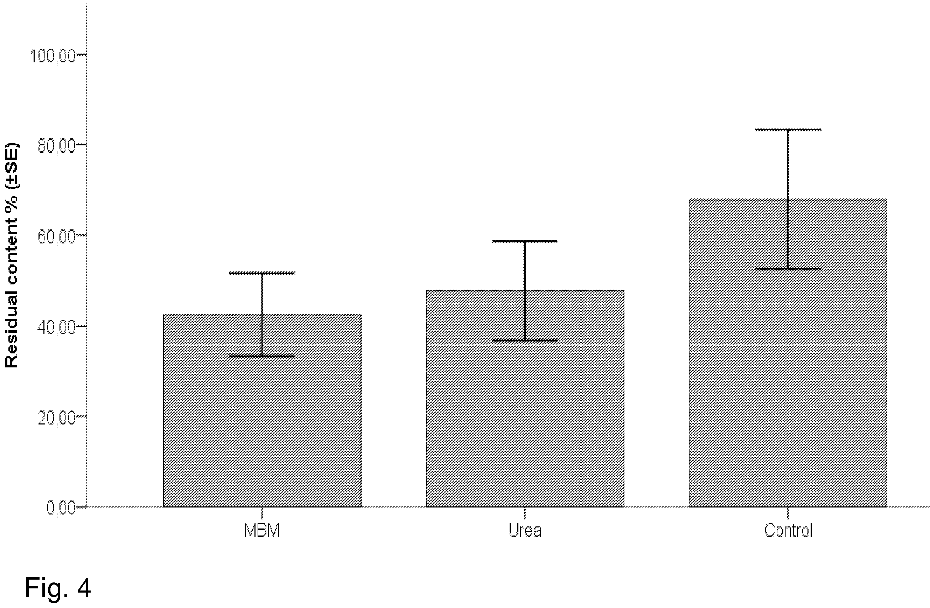

The decay of PAH compounds was improved by the MBM treatment (Figure 4). After three months, the content of PAHs had only declined significantly in the MBM treated sample (Z=-2.76, p=0.008). The content of PAHs in the urea treated sample, and in the sample remediated by natural attenuation did not significantly differ between the zero datum and the last sampling point (Z=-1.6, p=0.109, for both conditions). In the MBM treated samples, ca. 60 % w:w of the total PAH content had decayed after three months of remediation, whereas natural attenuation only allows a decay of ca. 30 % w:w (Figure 4). Thus, using MBM in remediation of PAH contaminated sand accelerates the decay of PAH-compounds. The treatment by MBM has demonstrated to be a noteworthy remediation method.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention.

Furthermore, some of the features of the afore-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. Use of an additive comprising bone meal in environmental remediation of polluted material, **characterized in that**
the bone meal is used as an oxygen source,
the additive comprises bone meal from slaughterhouse byproduct and comprises less than 50 % w:w of proteins; at least 10 % w:w of lipid material; 23-60% w:w of C; 8-13 % w:w of Ca; 5-9 % w:w of P; 5-8.5 % w:w of N; and wherein the ratio of N:P ranges from 0.5 to 2 and the ratio of C:N ranges from 3 to 4,
and the use comprises mechanical mixing of the additive with the polluted material.

2. The use according to claim 1, wherein the polluted material comprises soil, earth, ground, sand, sediment, clay, mud, sludge, slurry, peat, dredging mass, compost, litter, ash, industrial waste stream, or a mixture thereof.

3. The use according to claim 1 or 2, wherein the polluted material comprises at least one organic pollutant selected from gasoline, diesel fuel, diesel oil, oil hydrocarbon, dye, polyaromatic hydrocarbon, chlorophenol, straight-chain hydrocarbon, branched hydrocarbon, cyclic hydrocarbon, aromatic hydrocarbon, methyl tert-butyl ether, triazine, hydrocarbon with at least one triatzine ring, and a mixture thereof.

4. The use according to any of claims 1 to 3, wherein the polluted material further comprises at least one heavy metal.

5. The use according to any of claims 1 to 4, wherein the remediation is performed *in situ.*

6. The use according to any of claims 1 to 5, wherein the remediation is performed *ex situ.*

7. The use according to any of claims 1 to 6, wherein the additive is mixed with the polluted material.

8. The use according to any of claims 1 to 7, wherein the additive is applied on the surface of the polluted material.

9. The use according to any of claims 1 to 8, wherein the ratio of the additive to the polluted material ranges from 0.001 to 0.5, preferably from 0.001 to 0.2, and more preferably from 0.005 to 0.1.

## Patentansprüche

1. Verwendung eines Zusatzstoffs, umfassend Knochenmehl, bei der Umweltsanierung von verschmutztem Material, **dadurch gekennzeichnet, dass**
das Knochenmehl als eine Sauerstoffquelle verwendet wird,
der Zusatzstoff Knochenmehl von einem Schlachthofnebenprodukt umfasst und weniger als 50 Gew.-% Proteine; mindestens 10 Gew.-% Lipidmaterial; 23-60 Gew.-% C; 8-13 Gew.-% Ca; 5-9 Gew.-% P; 5-8,5 Gew.-% N umfasst und wobei das Verhältnis von N:P von 0,5 bis 2 reicht und das Verhältnis von C:N von 3 bis 4 reicht,
und die Verwendung ein mechanisches Mischen des Zusatzstoffs mit dem verschmutzten Material umfasst.

2. Verwendung nach Anspruch 1, wobei das verschmutzte Material Baugrund, Erde, Erdboden, Sand, Sediment, Ton, Schlamm, Schlick, Gülle, Torf, Baggergut, Kompost, Streu, Asche, industriellen Abwasserstrom oder ein Gemisch davon umfasst.

3. Verwendung nach Anspruch 1 oder 2, wobei das verschmutzte Material mindestens einen organischen Schmutzstoff umfasst, der aus Benzin, Dieselkraftstoff, Dieselöl, Ölkohlenwasserstoff, Farbstoff, polyaromatischem Kohlenwasserstoff, Chlorphenol, geradkettigem Kohlenwasserstoff, cyclischem Kohlenwasserstoff, aromatischem Kohlenwasserstoff, Methyl-tert.-butylether, Triazin, Kohlenwasserstoff mit mindestens einem Triazinring und einem Gemisch davon ausgewählt ist.

4. Verwendung nach einem der Ansprüche 1 bis 3, wobei das verschmutzte Material weiterhin mindestens ein Schwermetall umfasst.

5. Verwendung nach einem der Ansprüche 1 bis 4, wobei die Sanierung *in situ* durchgeführt wird.

6. Verwendung nach einem der Ansprüche 1 bis 5, wobei die Sanierung *ex situ* durchgeführt wird.

7. Verwendung nach einem der Ansprüche 1 bis 6, wobei der Zusatzstoff mit dem verschmutzten Material gemischt wird.

8. Verwendung nach einem der Ansprüche 1 bis 7, wobei der Zusatzstoff auf der Oberfläche des verschmutzten Materials aufgebracht wird.

9. Verwendung nach einem der Ansprüche 1 bis 8, wobei das Verhältnis des Zusatzstoffs zu dem verschmutzten Material von 0,001 bis 0,5, vorzugsweise von 0,001 bis 0,2 und mehr bevorzugt von 0,005 bis 0,1 reicht.

## Revendications

1. Utilisation d'un additif comprenant de la farine d'os dans la remédiation environnementale d'un matériau pollué, **caractérisée en ce que**
la farine d'os est utilisée en tant que source d'oxygène,
l'additif comprend de la farine d'os à partir d'un sous-produit d'abattoir et comprend moins de 50 % en poids de protéines ; au moins 10 % en poids de matière lipidique ; entre 23 et 60 % en poids de C ; entre 8 et 13 % en poids de Ca ; entre 5 et 9 % en poids de P ; entre 5 et 8,5 % en poids de N ; et dans laquelle le rapport de N:P est compris entre 0,5 et 2 et le rapport de C:N est compris entre 3 et 4,
et l'utilisation comprend le mélange mécanique de l'additif avec le matériau pollué.

2. Utilisation selon la revendication 1, dans laquelle le matériau pollué comprend le sol, la terre, le sol, le sable, les sédiments, l'argile, la vase, la boue, le lisier, la tourbe, la masse de dragage, le compost, la litière, la cendre, le flux de déchets industriels ou un mélange de ceux-ci.

3. Utilisation selon la revendication ou la revendication 12, dans laquelle le matériau pollué comprend au moins un polluant organique choisi parmi l'essence, le carburant diesel, l'huile diesel, l'huile d'hydrocarbure, le colorant, l'hydrocarbure polyaromatique, le chlorophénol, l'hydrocarbure linéaire, l'hydrocarbure ramifié, l'hydrocarbure cyclique, l'hydrocarbure aromatique, le méthyl tert-butyl éther, la triazine, l'hydrocarbure avec au moins un cycle triazine, et un mélange de ceux-ci.

4. Utilisation selon l'une quelconque des revendications 1 à 3, dans laquelle le matériau pollué comprend en outre au moins un métal lourd.

5. Utilisation selon l'une quelconque des revendications 1 à 4, dans laquelle la remédiation est effectuée in situ.

6. Utilisation selon l'une quelconque des revendications 1 à 5, dans laquelle la remédiation est effectuée ex situ.

7. Utilisation selon l'une quelconque des revendications 1 à 6, dans laquelle l'additif est mélangé avec le matériau pollué.

8. Utilisation selon l'une quelconque des revendications 1 à 7, dans laquelle l'additif est appliqué sur la surface du matériau pollué.

9. Utilisation selon l'une quelconque des revendications 1 à 8, dans laquelle le rapport de l'additif au matériau pollué est compris entre 0,001 et 0,5, de préférence compris entre 0,001 et 0,2, et plus préférablement compris entre 0,005 et 0,1.
